# EUROPÄISCHE PATENTSCHRIFT

(11) **EP 1 276 056 B1**
(45) Veröffentlichungstag und Bekanntmachung des Hinweises auf die Patenterteilung: **26.12.2012**
(21) Anmeldenummer: 01116843.2
(22) Anmeldetag: 10.07.2001
(51) Int. Cl.: G06F 17/30

(54) **Verfahren zum Verwalten einer Datenbank**
Method for managing a Database
Méthode pour administrer une base de données

(43) Veröffentlichungstag der Anmeldung: 15.01.2003
(73) Patentinhaber: Software AG, D-64297 Darmstadt (DE)
(72) Erfinder: Winkler, Kay Hans-Peter, 64287 Darmstadt (DE)
(74) Vertreter: Heselberger, Johannes

(56) Entgegenhaltungen:
- EP-A- 1 089 195
- WO-A-97/34240
- US-A- 5 553 216
- US-A- 5 708 806
- US-A- 6 105 022
- US-B1- 6 240 407

## Beschreibung

Die Erfindung betrifft ein Verfahren zum Verwalten einer Datenbank (data base),-gemäß den Ansprüchen 1 und 2.

Ferner betrifft die Erfindung eine Datenbank gemäß den Ansprüchen 10 und 11.

Ein Verfahren zum Verwalten einer Datenbank ist aus der EP 1 089 195 A1 bekannt. In der Datenbank sind Daten, insbesondere Inhaltsdaten und Strukturdaten abgespeichert. Die Daten sind Bestandteil eines Dokuments, das mehrere Datenelemente aufweist und in der Datenbank gespeichert ist. Jedes Datenelement enthält Inhaltsdaten und/oder Strukturdaten.

Die Datenbank ist durch ein Schema strukturiert. Das Schema ist in vorgegebener Weise definiert. Es beschreibt die für die Datenbank zu erwartenden Daten. Die Beschreibung muß nicht vollständig sein. In dem Schema sind mehrere Knoten hierarchisch einander zugeordnet. Ein einziger sogenannter Wurzelknoten bildet die höchste Ebene des Schemas. Alle übrigen Knoten der Hierarchie hängen von dem Wurzelknoten ab. Eine volle Benennung jedes Knotens entspricht einem "Schemapfad" von dem Wurzelknoten zu dem benannten Knoten. Somit enthält jeder voll benannte Knoten eine Information darüber, in welchem Verhältnis der Knoten zu anderen Knoten in der hierarchischen Struktur steht. Die Datenbank weist ein Magazin auf, in das für jeden Knoten der jeweilige Pfad von dem Wurzelknoten zu dem Knoten sowie eine Pfadreferenz, die auf diesen Pfad hinweist, eintragbar sind.

Die bekannte Datenbank ist zur Aufnahme von Dokumenten vorgesehen, deren Struktur in einem Abschnitt des jeweiligen Dokuments vorgegeben ist, in dem ein oder mehrere Bezeichner (tags) definiert sind. Die Definition jedes Bezeichners umfasst eine Einordnung des jeweiligen Bezeichners in die Gesamtheit der Bezeichner des Dokuments, so dass die Struktur des Dokuments bestimmt ist. Die Struktur des Dokuments ist hierarchisch ausgebildet. Eine von einem ersten Bezeichner beschriebene erste Position in der Struktur ist somit zu einer von einem zweiten Bezeichner beschriebenen zweiten Position in der Struktur unter-, nebenoder übergeordnet. Zu jeder Position in der Struktur führt von der obersten Ebene der Hierarchie ein Pfad.

Der Inhalt des Dokuments ist in einem oder mehreren Datenelementen enthalten. Die Datenelemente des Dokuments sind strukturiert angeordnet, indem jedes Datenelement durch jeweils einen Bezeichner bezeichnet ist, der den Inhalt jeweiligen Datenelements beschreibt.

Jedes Datenelement und der jeweilige Bezeichner des Datenelements bilden gemeinsam ein Paar. Jedes Paar ist durch eine Pfadreferenz referenzierbar, die auf den Pfad und somit auf die Position dieses Paares in der hierarchischen Struktur hinweist. Die Pfadreferenz ist in das Magazin gemeinsam mit dem referenzierten Pfad zu dem Paar von Datenelement und Bezeichner des Datenelements eintragbar.

Jedes Dokument ist durch eine Dokumentreferenz referenzierbar. Die Dokumentreferenz ist in das Magazin der Datenbank, auch "Repository" genannt, eintragbar. Das Magazin ist als zentrale Verwaltungsstelle der Datenbank ausgebildet.

Das Magazin wird angelegt, nämlich initialisiert, wenn das erste Dokument in der Datenbank gespeichert wird. Das Magazin wird aktualisiert, nämlich erweitert, wenn ein weiteres Dokument gespeichert wird. Anlegen bzw. Aktualisieren der Datenbank erfolgen, indem das Dokument, das abgespeichert wird, eine Analyseroutine durchläuft, die die Daten des Dokuments in Paaren von einem Datenelement und einem Bezeichner anordnet. Jedes Paar wird aufgrund der definitionsgemäßen Position des Bezeichners in der hierarchischen Struktur des Dokuments einem entsprechenden Knoten in dem Schema der Datenbank zugeordnet. Falls das Schema den Knoten noch gar nicht aufweist, werden der Pfad zu dem Knoten sowie eine zugeordnete Pfadreferenz in das Magazin der Datenbank eingetragen. Jedenfalls wird der Pfadreferenz des Knotens die Dokumentreferenz des Dokuments zugeordnet, und die Dokumentreferenz wird in das Magazin der Datenbank eingetragen (mapping).

Weil das Magazin die Pfadreferenz jedes Paares aufweist, spiegelt es das Schema der Datenbank, d. h. die hierarchische Struktur der Datenbank wider. Die Pfadreferenzen sind in dem Magazin während des Bestehens der Datenbank gewissermaßen eingelagert.

In der Praxis kann eine auf einem Computersystem mit einer Speichereinheit und einer zentralen Verarbeitungseinheit verwaltete Datenbank sehr groß sein. Die Datenbank weist dann ein so umfangreiches Magazin auf, dass ein Durchsuchen dieses Magazins eine erhebliche Verarbeitungszeit der zentralen Verarbeitungseinheit des Computersystems beansprucht.

In der US 6,240,407 B1 ist ein Verfahren beschrieben, um ein Magazin einer Datenbank anhand eines strukturierten Dokuments anzulegen. Das strukturierte Dokument wird daraufhin analysiert, ob es wenigstens ein Datenelement aufweist. Dann wird das Dokument unter Anwendung vorgebbarer Abstraktionsschritte abstrahiert, um eine Menge von abstrahierten Werten zu erhalten. Die Menge abstrahierter Werte wird in dem Magazin gespeichert.

Die Menge abstrahierter Werte ist gegenüber der Menge der Datenelemente geringer, so dass der Umfang des Magazins vergleichsweise geringer ist. Eine Datenbank, deren Magazin mit dem bekannten Verfahren angelegt ist, ermöglicht zwar eine vollstrukturierte Suche nach Datenelementen, die einen mittels eines Suchbegriffs vorgegebenen Inhalt aufweisen und die durch einen mittels eines Filters vorgegebenen Bezeichner bezeichnet sind, aber die inhaltliche Suche innerhalb eines abstrahierten Wertes beansprucht dagegen einen höheren Verarbeitungszeitaufwand, da sie sich jeweils auf die Menge von Datenelementen erstreckt, die von der Abstraktion der Datenelemente zu dem abstrahierten Wert erfasst sind.

Ein Nachteil des bekannten Verfahrens besteht darin, dass der Umfang des Magazins (repository) stark wächst, wenn Dokumente in der Datenbank gespeichert werden, die vom Schema der Datenbank nicht voll beschrieben sind. Derartige Dokument werden "open content" Dokumente genannt. Die Struktur der "open content" Dokumente ist zwar mit dem Schema der Datenbank, in der sie gespeichert werden sollen, konform, aber sie weicht insofern von dem Schema der Datenbank ab, als sie eine Erweiterung gegenüber dem Schema der Datenbank darstellt. Das jeweilige Dokument kann dann wenigstens einen Bezeichner aufweisen, dem kein Knoten des Schemas der Datenbank entspricht. Wenn das Dokument in der Datenbank gespeichert wird, muss das Schema um den entsprechenden Knoten ergänzt werden, und ein Eintrag des zusätzlichen Knotens in das Magazin ist erforderlich. Wenn deshalb das Schema im Laufe der Verwaltungsdauer der Datenbank immer mehr Knoten aufweist, kann bei vielen Anwendungen eine Suche wegen der erforderlichen Verarbeitungszeit technisch gar nicht mehr zu bewältigen sein, so dass das Computersystem, mit dessen Hilfe die Datenbank verwaltet wird, den Dienst verweigert (denial of service).

Eine erste Aufgabe der Erfindung besteht darin, das bekannte Verfahren zum Verwalten von Daten in einer Datenbank, in die Dokumente eintragbar sind, deren Struktur vom Schema der Datenbank abweichen kann, derart zu verbessern, dass ein Verarbeitungszeitaufwand zum Zugriff der Daten in der Datenbank besonders gering ist.

Eine zweite Aufgabe der Erfindung besteht darin, eine Datenbank zu schaffen, die unter Einsatz eines besonders geringen Verarbeitungszeitaufwands durchsuchbar ist.

Die Erfindung löst die erste Aufgabe durch ein erstes Verfahren gemäß Anspruch 1.

Der Begriff "Dokument" ist eine Verallgemeinerung des Begriffes "Datensatz" in Hinblick auf strukturierte und sich wiederholende Elemente. Ein Dokument kann von einer Datei erfaßt sein und diese Datei ausfüllen. Alternativ kann das Dokument Bestandteil einer Datei sein, die mehrere Dokumente erfaßt. Alternativ kann das Dokument mehrere Dateien ausfüllen. Das Dokument weist wenigstens ein "Datenelement" auf. Das Datenelement kann in an sich bekannter Weise als ein Datenfeld des Datensatzes zur Aufnahme von Inhaltsdaten ausgebildet sein. Gemäß der Erfindung ist das Dokument strukturiert ausgebildet. Das strukturierte Dokument weist wenigstens ein Datenelement auf, das Strukturdaten mit der Position des Datenelements in der Struktur des Dokuments enthält. Die Struktur ist hierarchisch, insbesondere baumartig, ausgebildet. "Speichern" bedeutet ein Eintragen des Dokuments in die Datenbank, beispielsweise durch Importieren oder Eingeben, so daß die Datenbank das Dokument beinhaltet.

Um die Datenbank zu durchsuchen, gibt der Benutzer ein "Filter" an, d. h. der Benutzer schränkt den durch einen Suchbegriff benannten, gesuchten Inhalt durch einen Bezeichner hinsichtlich der Positionen des Datenelements mit dem gesuchten Inhalt in der hierarchischen Struktur des Dokuments ein. Eine Suchfunktion ermittelt in dem Magazin der Datenbank die Pfadreferenz des Pfades zu jenem Knoten, dem der einschränkende Bezeichner entspricht. Die Suchfunktion überprüft jedes Dokument, dessen Dokumentreferenz unter Zuordnung zu dem ermittelten Knoten eingetragen ist, daraufhin, ob ein Abschnitt des Inhalts des mit dem Bezeichner des Filters bezeichneten Datenelements dem Suchbegriff entspricht. Falls ja, so wird dieses Datenelement dem Suchergebnis hinzugefügt.

Der Verarbeitungszeitaufwand zum Durchsuchen einer Datenbank, in die Dokumente eintragbar sind, deren Struktur vom Schema der Datenbank abweichen kann, ist besonders gering, wenn das Dokument unter Anwendung des ersten erfindungsgemäßen Verfahrens in die Datenbank eingetragen ist. Somit gewährleistet das erfindungsgemäße Verfahren eine besonders kurze Zugriffszeit auf die Daten in der Datenbank.

Das erfindungsgemäße Verfahren ermöglicht insbesondere auch dann eine besonders schnelle Suche, wenn die hierarchische Struktur der gespeicherten Dokumente nicht jeweils strikt dem Schema der Datenbank entspricht. Die hierarchische Struktur des jeweiligen Dokuments kann sich von dem Schema darin unterscheiden, dass sie wenigstens ein Datenelement aufweist, dessen Bezeichner keinem Knoten des Schemas zuordenbar ist. Ein derartiger Bezeichner liegt auf einem "Zusatzpfad".

Falls das von dem Benutzer angegebene Filter einen Bezeichner auf einem Zusatzpfad aufweist, verlangt die Suche in der Datenbank einen besonders geringen Aufwand, weil das Strukturverzeichnis für jedes Dokument eine "Zusatzpfadreferenz" enthält, sofern der referenzierte Pfad in dem Schema der Datenbank nicht zu einem Knoten führt. Ein Durchsuchen der Zusatzpfadreferenzen des Dokuments erübrigt somit ein zeitraubendes Durchsuchen eines Datenelements, das in der hierarchischen Struktur des Dokuments aufgrund einer Bezeichnung durch einen übergeordneten Bezeichner übergeordnet ist, der auf der Strecke des Zusatzpfades liegt und zu dem es in dem Schema der Datenbank einen entsprechenden Knoten gibt.

Die Erfindung löst die erste Aufgabe ferner durch ein zweites Verfahren gemäß Anspruch 2.

Der Verarbeitungszeitaufwand zum Durchsuchen einer Datenbank, in die Dokumente eintragbar sind, deren Struktur vom Schema der Datenbank abweichen kann, ist besonders gering, wenn das Dokument unter Anwendung des zweiten erfindungsgemäßen Verfahrens eingetragen ist.

Das erfindungsgemäße Verfahren ermöglicht nämlich auch dann eine besonders schnelle Suche, wenn die hierarchische Struktur der gespeicherten Dokumente nicht jeweils strikt dem vorgegebenen Schema der Datenbank entspricht. Die hierarchische Struktur des jeweiligen Dokuments kann sich von dem Schema darin unterscheiden, dass sie bezüglich wenigstens eines Knotens des Schemas kein Datenelement aufweist, das durch einen Bezeichner bezeichnet ist, der dem Knoten entspricht. Ein derartiger Knoten bzw. Bezeichner liegt auf einem "Fehlpfad".

Falls das Filter einen Bezeichner auf einem Fehlpfad aufweist, verlangt die Suche in dem Strukturverzeichnis einen besonders geringen Aufwand, weil das Strukturverzeichnis für jedes Dokument eine "Fehlpfadreferenz" enthält, falls der referenzierte Pfad in der hierarchischen Struktur des Dokuments nicht zu einem Datenelement führt. Ein Durchsuchen der Fehlpfadreferenzen des Dokuments erübrigt somit ein zeitraubendes Durchsuchen des Magazins nach der Pfadreferenz zu vorhandenen Bezeichnern von Datenelementen des Dokuments.

Somit ermöglichen die vorstehenden, erfindungsgemäßen Verfahren, insbesondere in ihrer Kombination, ein besonders schnelles Durchsuchen einer Datenbank, in der Dokumente gespeichert sind, deren hierarchische Struktur von dem Schema der Datenbank abweicht. Die erfindungsgemäßen Verfahren erweitern den Anwendungsbereich von Datenbanken auf Eintragungen einer Vielzahl von Dokumenten "offenen" Inhalts, deren Struktur uneinheitlich sein kann. Denn eine Wirkung technischer Beschränkungen, insbesondere hinsichtlich der Befehlsverarbeitungsgeschwindigkeit einer zentralen Verarbeitungseinheit eines Computersystems zur Verwaltung der erfindungsgemäßen Datenbank und zur Durchführung der erfindungsgemäßen Verfahren, ist minimiert, weil der Umfang der zu durchsuchenden Verzeichnisse minimiert ist.

Bevorzugt weist das Verfahren die nachfolgenden Schritte auf:
- Prüfen, ob in dem Strukturverzeichnis der Datenbank zu einem Dokument, das aus der Datenbank gelöscht wird, ein Eintrag der Dokumentreferenz besteht, und - falls ja -
- Prüfen, ob wenigstens ein der Dokumentreferenz zugeordneter Eintrag einer Fehlpfadreferenz besteht, und - falls ja -
- Löschen der wenigstens einen ermittelten Fehlpfadreferenz aus dem Strukturverzeichnis der Datenbank;
sowie ferner:
- Prüfen, ob wenigstens ein der Dokumentreferenz zugeordneter Eintrag einer Zusatzpfadreferenz besteht, und - falls ja -
- Löschen der wenigstens einen ermittelten Zusatzpfadreferenz aus dem Strukturverzeichnis der Datenbank;
sowie ferner:
- Löschen der ermittelten Dokumentreferenz aus dem Strukturverzeichnis der Datenbank.

Mit dem bevorzugten Verfahren kann das Strukturverzeichnis der Datenbank besonders "schlank" gehalten werden, so dass eine Suche einen ganz besonders geringen Verarbeitungszeitaufwand beansprucht. Die Daten sind besonders effizient auffindbar. Die Gesamtsuchdauer bis zum Zugriff auf Daten der Ergebnismenge in der Datenbank ist besonders kurz. Denn bei dieser Ausführungsform entfernt das Verfahren solche Pfadreferenzen aus dem Strukturverzeichnis, die einem Dokument zugeordnet sind, das aus der Datenbank gelöscht wird. "Löschen" bedeutet ein Austragen des Dokuments aus der Datenbank, so dass ein Zugriff auf die Datenelemente des gelöschten Dokuments mittels der Suchfunktion (auch: Zugriffsfunktion, Abfragefunktion oder dergleichen Routine) der Datenbank nicht vorgesehen ist.

Das Verfahren gewährleistet in dieser Ausführungsform eine referentielle Integrität der Datenbank. "Referentielle Integrität" bedeutet, dass das Magazin in Verbindung mit dem Strukturverzeichnis der Datenbank vollständig und genau die Struktur der in der Datenbank gespeicherten Dokumente widerspiegelt. Die referentielle Integrität resultiert daraus, dass bei dieser Ausführungsform der Erfindung das Verfahren das Strukturverzeichnis der Datenbank derart verwaltet, das es über die Dokumente und ihre jeweilige Struktur gewissermaßen Buch führt. Die referentielle Integrität der Datenbank ermöglicht eine weitestgehende strukturelle Suche, die dabei nicht durch Pfadreferenzen belastet ist, die Dokumenten zugeordnet waren, die zwischenzeitlich aus der Datenbank gelöscht wurden. Somit ist die Zugriffszeit auf Daten in der Datenbank optimiert.

Bei einer Ausführungsform der erfindungsgemäßen Verfahren ist das Strukturverzeichnis listenartig ausgebildet. Es weist eine Dokumentliste zur Aufnahme der führungsform weist das Strukturverzeichnis wenigstens eine Zusatzpfadliste zur Aufnahme der Strukturpfadreferenzen als Zusatzpfadreferenzen auf, die den eingetragenen Dokumenten zugeordnet sind. Bei noch einer weiteren Ausfiihrungsform weist das Magazin wenigstens eine Fehlpfadliste zur Aufnahme der Schemapfadreferenzen als Fehlpfadreferenzen auf, die den eingetragenen Dokumenten zugeordnet sind. Der Vorteil einer solchen Ordnung des Strukturverzeichnisses in Listen besteht darin, dass bei der erfindungsgemäßen Anordnung das Strukturverzeichnis mit den eingetragenen Referenzen auf einem Speichermedium besonders kompakt speicherbar ist, so dass besonders kurze Zugriffszeiten auf die Referenzen möglich sind. Deshalb ist bei den vorstehenden Ausführungsformen der erfindungsgemäßen Verfahren eine Datenbanksuche besonders schnell durchführbar.

Bei einer Ausführungsform der erfindungsgemäßen Verfahren ist das strukturierte Dokument in einer Auszeichnungssprache (markup language) formatiert. Jede Position in der Struktur, d. h. jedes Datenelement, ist durch einen Bezeichner (tag) der Auszeichnungssprache bezeichnet. Ein Datenelement, dem keine weiteren Datenelemente untergeordnet sind, ist mit Inhalt (content) füllbar. Besonders bevorzugt ist die Auszeichnungssprache als "Extended Markup Language" (XML) ausgebildet.

Bevorzugt ist eine Ausführungsform des vorstehenden Verfahrens, bei dem die Datenbank einen Dokumentzähler zum Eintragen der Anzahl der in der Datenbank gespeicherten Dokumente aufweist. Jedes Mal wenn ein Dokument der Menge eingetragen bzw. festgestellt wird, zählt der Dokumentzähler um eine vorgegebene Einheit hoch. "Erstmals festgestellt" bedeutet, dass ein Dokument zuvor zwar schon in der Datenbank gespeichert, aber noch nicht vom Dokumentzähler erfasst war. Dies kann beispielsweise der Fall sein, wenn eine Datenbank gemäß dem Stand der Technik mit dem Ziel umgestellt bzw. eingerichtet wird, das erfindungsgemäße Verwaltungsverfahren auf diese Datenbank künftig anzuwenden. Dazu müssen sowohl ein Magazin als auch ein Strukturverzeichnis angelegt werden. Wenn ein Dokument aus der Datenbank gelöscht wird, zählt der Dokumentzähler um die vorgegebene Einheit herunter. Somit beinhaltet der Dokumentzähler eine Information über die Anzahl der beim Aufbau des Schemas erfassten Dokumente in der Datenbank.

Besonders bevorzugt ist jedem Knoten des Schemas ein Knotenzähler zugeordnet. Der Knotenzähler wird um die vorgegebene Einheit hochgesetzt, wenn das erste bzw. jedes weitere Dokument der Menge eingetragen bzw. festgestellt wird und dieses Dokument ein Datenelement an einer dem Knoten entsprechenden Position in der hierarchischen Struktur des Dokuments aufweist. Zu jedem Knoten des Schemas kann anhand der Zählerstände die Selektivität des Knotens ermittelt werden. "Selektivität" bedeutet das Verhältnis aus der Anzahl der in der Datenbank gespeicherten Datenelemente, die an einer Position der hierarchischen Struktur des jeweiligen Dokuments angeordnet sind, die der Position des Knotens in dem Schema entspricht, zu der Anzahl der gespeicherten Dokumente. Die Möglichkeit, Kenntnis über die Selektivität zu erlangen, ist besonders vorteilhaft, da sie dem Datenbankanbieter als Grundlage für eine Ausbildung des vorgegebenen Schemas als ein - nach objektiven Kriterien und/oder subjektiven Kriterien des Datenbankanbieters - möglichst "ideales" Schema dienen kann, mittels dessen ein Durchsuchen der Datenbank besonders wenig Zeit der zentralen Verarbeitungseinheit erfordert.

Die Erfindung löst die *zweite* Aufgabe durch eine erste Datenbank, mit einer Dokumentsammlung zur Aufnahme wenigstens eines referenzierbaren, strukturierten Dokuments, das wenigstens ein Datenelement aufweist, dessen Position in der Dokumentstruktur durch einen referenzierbaren Strukturpfad bestimmt ist, einem Schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, einem Magazin, in das der Schemapfad sowie, zugeordnet zu dem Schemapfad, wenigstens eine Dokumentreferenz eintragbar ist, und einem Strukturverzeichnis, in das die Dokumentreferenz sowie, zugeordnet zu der Dokumentreferenz, wenigstens eine Strukturpfadreferenz als Zusatzpfadreferenz eintragbar ist.

Die Erfindung löst die *zweite* Aufgabe ferner durch eine zweite Datenbank, mit einer Dokumentsammlung zur Aufnahme wenigstens eines referenzierbaren, strukturierten Dokuments, das wenigstens ein Datenelement aufweist, dessen Position in der Dokumentstruktur durch einen referenzierbaren Strukturpfad bestimmt ist, einem Schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, und einem Magazin, in das der Schemapfad sowie, zugeordnet zu dem Schemapfad, wenigstens eine Dokumentreferenz eintragbar ist, und einem Strukturverzeichnis, in das die Dokumentreferenz sowie, zugeordnet zu der Dokumentreferenz, wenigstens eine Strukturpfadreferenz als Fehlpfadreferenz eintragbar ist.

Bevorzugt ist eine Ausführungsform der erfindungsgemäßen Datenbank mit den Merkmalen sowohl der ersten als auch der zweiten vorgenannten Datenbank. Bei den erfindungsgemäßen Datenbanken ist das Strukturverzeichnis dokumentorientiert ausgebildet. "Dokumentorientiert" bedeutet, dass Informationen, z. B. Pfadreferenzen, derart in das Strukturverzeichnis eingetragen werden, dass sie jeweils einem Dokument zugeordnet sind. Die vorgenannte Ausführungsform der Datenbank ist besonders vorteilhaft, weil die erfindungsgemäßen Verfahren zum Verwalten der Datenbank anwendbar sind. Eine Abfrage von Daten aus der mit dem erfindungsgemäßen Verfahren verwalteten Datenbank beansprucht einen besonders geringen Verarbeitungszeitaufwand.

Ganz besonders bevorzugt ist eine Ausführungsform der Datenbank, bei der die Datenbank ein Selektivitätsverzeichnis aufweist. In dem Selektivitätsverzeichnis ist für jeden Knoten des Schemas das Verhältnis des Wertes des zugeordneten Knotenzählers zum Wert des Dokumentzählers eintragbar. Bei dieser Ausführungsform der erfindungsgemäßen Datenbank ist das Selektivitätsverzeichnis schemaorientiert ausgebildet. "Schemaorientiert" bedeutet, dass Informationen, z. B. Dokumentreferenzen, derart in das Selektivitätsverzeichnis eingetragen werden, dass sie jeweils einem Knoten des Schemas zugeordnet sind. Das Selektivitätsverzeichnis ermöglicht einen besonders schnellen Zugriff auf die Selektivitätsinformation. Somit ist eine Voraussetzung gegeben, um das vorgegebene Schema laufend an das - entsprechend den objektiven Kriterien und/oder den subjektiven Kriterien des Datenbankanbieters - möglichst "ideale" Schema anzupassen. Eine Anpassung dieses Schemas kann beispielsweise infolge eines Eintrags oder einer Löschung eines Dokuments erforderlich sein, weil etwa die Selektivität eines Knotens sich derart verändert, dass seine Aufnahme in das Schema sinnvoll ist.

Nachfolgend wird ein Ausführungsbeispiel der Erfindung anhand der Figuren näher erläutert. Es zeigen:
- Fig. 1: einen Aufbau einer Datenbank, die mittels des erfindungsgemäßen Verfahrens verwaltet wird;
- Fig. 2: ein ideales Schema der Datenbank in Fig. 1;
- Fig. 3: eine Struktur einer Instanz eines ersten Dokuments, das in der Datenbank in Fig. 1 gespeichert ist;
- Fig. 4: eine Struktur einer Instanz eines zweiten Dokuments, das zum Speichern in der Datenbank in Fig. 1 vorgesehen ist;
- Fig. 5a: ein Magazin der Datenbank in Fig.1;
- Fig. 5b: ein Selektivitätsverzeichnis der Datenbank in Fig. 1; und
- Fig. 6: ein Strukturverzeichnis der Datenbank in Fig. 1.

Gemäß dem Ausführungsbeispiel ist die Datenbank dazu vorgesehen, dass in der Datenbank Texte von Theaterstücken gespeichert werden. Die Datenbank ist mit der Erwartung eingerichtet, dass jeweils ein Dokument einen Text eines Theaterstücks einschließlich einer Kritik aufweist. Das Ausführungsbeispiel ist nur als ein Beispiel aufzufassen: weder hinsichtlich der Ausführung noch hinsichtlich des Anwendungszweckes sind die erfmdungsgemäßen Verfahren, die erfindungsgemäße Datenbank, das erfindungsgemäße Speichermittel und das erfindungsgemäße Computersystem auf das Ausführungsbeispiel beschränkt! Insbesondere erfaßt die Erfindung sämtliche Formen strukturierter Daten. So ist die Datenbank gemäß einem anderen Ausführungsbeispiel der Erfindung, das im folgenden nicht weiter erläutert wird, dazu vorgesehen, dass in der Datenbank XML Dokumente, die Prozesssequenzen enthalten, gespeichert werden.

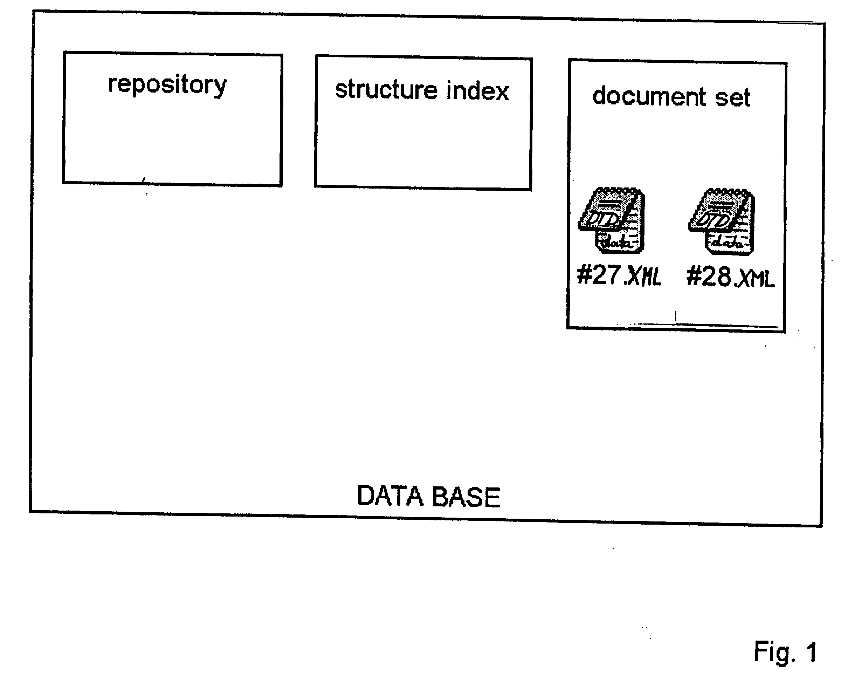

Die Datenbank (data base) gemäß dem Ausführungsbeispiel ist in Figur 1 dargestellt. Sie weist eine Dokumentsammlung (document set), ein Magazin (repository) als zentrale Verwaltungsstelle der Datenbank und ein Strukturverzeichnis (structure index) auf. In der Dokumentsammlung befinden sich zwei Dokumente, die mittels einer Dokumentreferenz (document reference), d. h. einer Kennzahl, referenziert sind. Vorliegend lautet die Kennzahl des ersten Dokuments # 27, die des zweiten Dokuments # 28. Die Dokumente sind in der sogenannten "Extended Markup Language" (XML) formatiert, d. h. sie sind als XML-Dokumente ausgebildet. Sie weisen jeweils einen Prolog, der eine Dokumenttyp-Definitionen (DTD) umfasst, sowie eine Instanz, die XML-Daten umfasst, auf. Die Dokumenttyp-Definition schreibt vor, wie das Dokument eines bestimmten Typs auszusehen hat. Das entsprechend ausgezeichnete Dokument an sich ist die Instanz des Dokumententyps. Demnach kann bei einer Ausführungsform das XML-Dokument nur die Instanz aufweisen, während die Dokumententyp-Deklaration gesondert abgelegt ist.

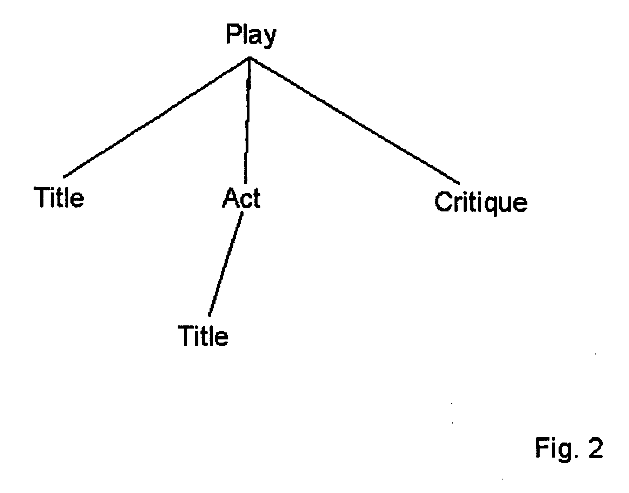

Im Ausführungsbeispiel weist die Datenbank ein "ideales" Schema auf, das vom Datenbankanbieter vorgegeben ist. Das ideale Schema ist in Figur 2 dargestellt. Die Knoten des Schemas sind in einer Hierarchie angeordnet. Entsprechend dem vorgesehenen Anwendungszweck der Datenbank weist das Schema einen ersten Knoten, den Wurzelknoten, "Play" sowie drei von dem Wurzelknoten unmittelbar abhängige Knoten "Title", "Act" und "Critique" auf. Von dem Knoten "Act" hängt ein weiterer Knoten "Title" ab. Von den Knoten "Title" und "Critique" hängt kein weiterer Knoten ab. Ein diesen Knoten jeweils zugeordenbares Datenelement eines Dokuments ist vom Typ "#PCDATA" (parsed character data) ausgebildet und zur Aufnahme von Text vorgesehen. Zu jedem Knoten führt von dem Wurzelknoten des Schemas ein Schemapfad. Beispielsweise lautet der Pfad im Falle des letztgenannten Knotens "/Play/Act/Title". Das Schema ist von oben nach unten nach Art eines Baumes ausgebildet.

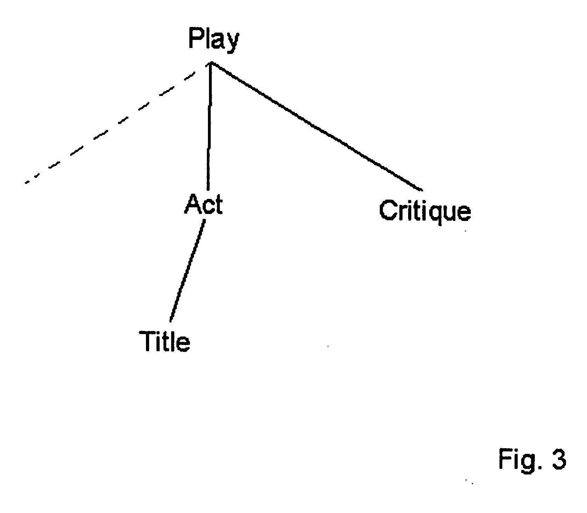

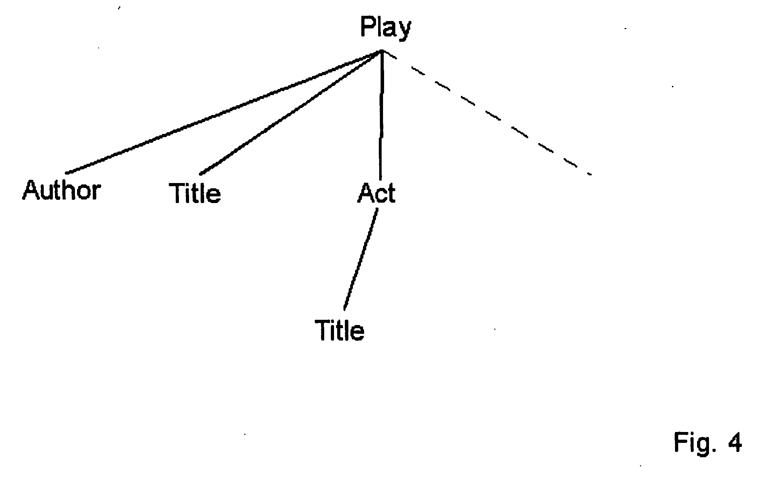

Die XML-Daten in der Instanz der Dokumente sind hierarchisch strukturiert. Die Struktur der Instanz des ersten Dokuments, # 27, ist in Figur 3 dargestellt. Die Struktur der Instanz des zweiten Dokuments, # 28, ist in Figur 4 dargestellt. Nachfolgend wird kurz von der "Struktur des Dokuments" gesprochen, wenn die Struktur der Instanz des Dokuments gemeint ist. Die Struktur jedes Dokuments weist ein oberstes Datenelement auf, an das weitere Datenelemente abhängig geknüpft sind. An einige der weiteren Datenelemente sind wiederum weitere Datenelemente geknüpft, so dass sich ähnlich dem Schema der Datenbank eine von oben nach unten baumartige Struktur ergibt. Im Falle des ersten Dokuments, # 27, sind beispielsweise dem Wurzelelement "Play" die Elemente "Act" und "Critique" abhängig untergeordnet.

Die Pfade gemäß dem Ausführungsbeispiel seien wie folgt referenziert:

| | |
|---|---|
| /Play | # 0 |
| /Play/Title | # 1 |
| /Play/Act | # 2 |
| /Play/Critique | # 3 |
| /Play/Act/Title | # 4 |
| /Play/Author | # 5 |

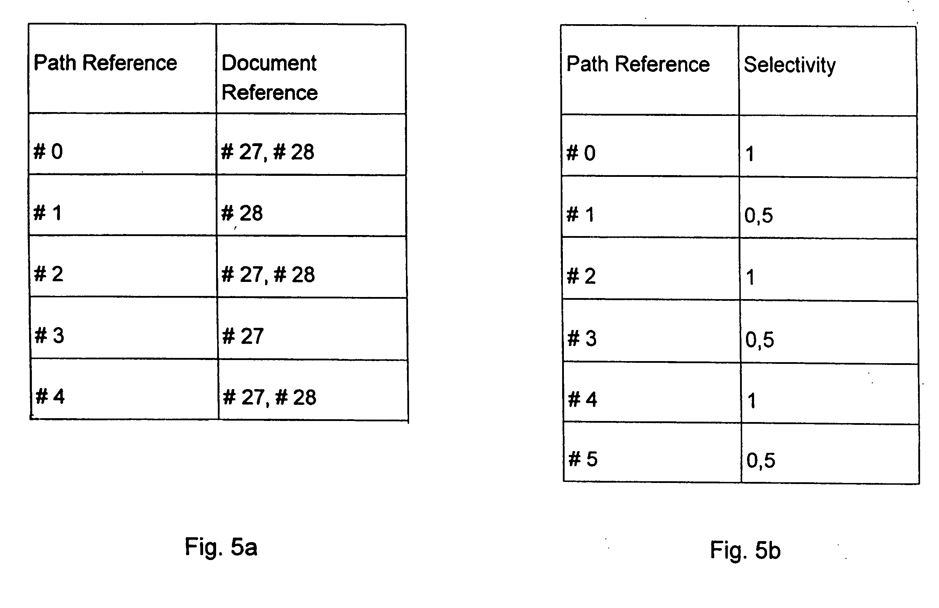

In Figur 5a ist ein Magazin des Ausführungsbeispiels dargestellt. Das Magazin ist schemaorientiert ausgebildet. Es weist eine erste Liste (Path Reference) mit Schemapfadreferenzen (Knotenreferenzen) und eine zweite Liste (Document Reference) mit Dokumentreferenzen auf. Für jeden Schemapfad ist zeilenweise angegeben, welches Dokument in der Dokumentsammlung ein Datenelement aufweist, dessen Position in der Struktur des jeweiligen Dokuments, der Position des Knotens in dem Schema der Datenbank entspricht. Beispielsweise weisen die Dokumente # 27 und # 28, weil ein Datenelement an einer Position innerhalb der jeweiligen Dokumentstruktur auf, die der Position des Knotens # 2 im Schema der Datenbank entspricht (Schemapfad: "/Play/Act", siehe obenstehende Tabelle). Dagegen weist beispielsweise nur das erste Dokument, # 27, ein Datenelement an einer Position innerhalb der Struktur dieses Dokuments auf, die dem Knoten # 3 im Schema der Datenbank entspricht (Schemapfad: "/Play/Critique").

In Figur 5b ist ein Selektivitätsverzeichnis des Ausführungsbeispiels dargestellt. Das Selektivitätsverzeichnis weist eine erste Liste (Path Reference) mit Schemapfadreferenzen (Knotenreferenzen) zu allen Schemapfaden auf, die wenigstens einem der Dokumente in dem Magazin zugeordnet sind. Eine zweite Liste (Selectivity) dient der Aufnahme von Selektivitätswerten zu den Schemapfaden. Der Selektivitätswert jedes referenzierten Pfades gibt an, in welchem Verhältnis die Anzahl der Dokumente mit einem Datenelement, dessen Position in der Struktur des Dokuments durch den referenzierten Pfad beschrieben wird, zu der Anzahl der in der Datenbank gespeicherten Dokumente (vorliegend: zwei) steht. Die Selektivitätsinformation ermöglicht eine besonders effiziente Suche, sofern die Suche aus mehreren Schritten besteht. Denn die Selektivitätsinformation erlaubt eine Abschätzung der in jedem Schritt zu durchsuchenden Datenmenge. Die Suche wird optimiert, indem im ersten Schritt die kleinste Menge, d. h. das Datenelement mit der größten Selektivität durchsucht wird. Entsprechendes gilt für nachfolgende Suchschritte.

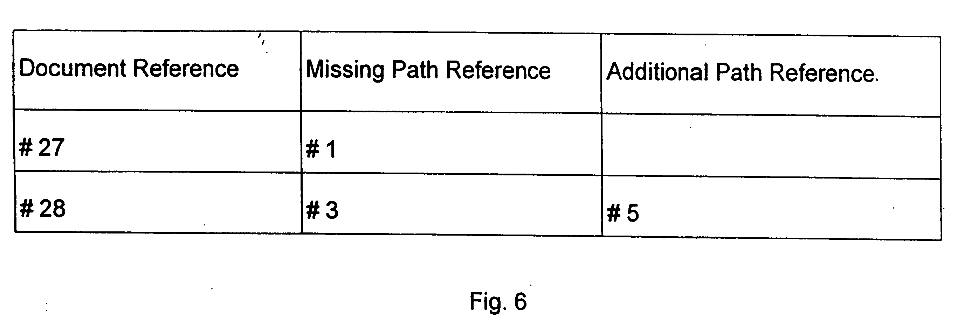

In Figur 6 ist das Strukturverzeichnis der Datenbank gemäß dem Ausführungsbeispiel dargestellt. Das Strukturverzeichnis ist dokumentbezogen. Es weist eine erste Liste (Document Reference) auf, in der Dokumentreferenzen eingetragen sind. Eine zweite Liste (Missing Path Reference), die Fehlpfadliste, weist Referenzen auf jene Pfade auf, die im Schema der Datenbank zu einem Knoten führen, zu dem es im jeweiligen Dokument kein entsprechendes Datenelement gibt. Eine dritte Liste (Additional Path Reference), die Zusatzpfadliste, weist Referenzen auf jene Zusatzpfade auf, denen zwar ein Datenelement im jeweiligen Dokument zugeordnet ist, zu denen jedoch kein entsprechender Knoten im Schema der Datenbank zugeordnet ist. Weder die Fehlpfadliste noch die Zusatzpfadliste sind auf eine Aufnahme nur eines Elementes pro Dokumentreferenz beschränkt. Wiese etwa das Dokument # 28 einen zweiten zusätzlichen mit # 6 referenzierten Pfad auf, so wären in die Zusatzpfadliste zwei Pfadreferenzen, nämlich # 5 und # 6, einzutragen.

Beispielsweise weist das ideale Schema den Pfad # 3 auf ("/Play/Critique", siehe obenstehende Tabelle). Das zweite Dokument, # 28, weist kein Datenelement auf, das in der Struktur des zweiten Dokuments derart positioniert ist, dass es durch den Pfad "/Play/Critique" erreichbar wäre (vgl. Figur 4, in der dieser an sich nicht vorhandene Pfad gestrichelt dargestellt ist). Im Vergleich mit dem Schema der Datenbank "fehlt" dieser Pfad gewissermaßen in der Struktur des zweiten Dokuments (vgl. Figur 2). Deshalb ist die Referenz des zweiten Dokuments, # 28, in der Dokumentreferenzliste des Strukturverzeichnisses eingetragen. Dieser Referenz ist in der Fehlpfadliste des Strukturverzeichnisses (Missing Path Reference) ein Eintrag der Pfadreferenz des "fehlenden" Pfades, nämlich # 3, zugeordnet.

Bei dem Ausführungsbeispiel weist das zweite Dokument ein Datenelement auf, das in der Struktur des zweiten Dokuments derart positioniert ist, dass es durch den Pfad "/Play/Author" erreichbar ist (vgl. Figur 4), der durch # 5 referenziert ist (siehe Tabelle oben). Im Vergleich mit dem Schema der Datenbank, das keinen Knoten aufweist, der durch diesen Pfad erreichbar wäre, existiert dieser Pfad in der Struktur des zweiten Dokuments gewissermaßen "zusätzlich". Deshalb ist der Referenz des zweiten Dokuments, # 28, in der Dokumentreferenzliste ein Eintrag der Pfadreferenz des "zusätzlichen" Pfades in der Zusatzpfadliste des Strukturverzeichnisses (Additional Path Reference), nämlich # 5, zugeordnet.

Die Datenbank ist auf einer Festplatte eines nicht dargestellten Computersystems abgespeichert. Das Computersystem weist eine zentrale Verarbeitungseinheit auf, auch: Zentralprozessoreinheit (CPU), die mit der Festplatte derart verbunden ist, dass Daten auf der Festplatte in der zentralen Verarbeitungseinheit verarbeitet werden können. Das Computersystem weist ferner eine Eingabeschnittstelle zum Import von Dokumenten und eine Eingabetastatur zur Eingabe von Daten und/oder Befehlen an das Computersystem sowie einen Monitor zur Darstellung von Daten auf.

Wenn der Benutzer ein Dokument etwa mittels der Eingabetastatur in das Computersystem eingibt und in der Datenbank speichert, dann kommt das erfindungsgemäße Verfahren zur Verwaltung der Datenbank zur Anwendung.

Wenn der Benutzer etwa mittels der Eingabetastatur der zentralen Verarbeitungseinheit des Computersystems einen Befehl erteilt, wonach ein Dokument, das in der Datenbank gespeichert ist, aus der Datenbank zu löschen sei, dann kommt das erfindungsgemäße Verfahren derart zur Anwendung, dass die Dokumentreferenz in der Dokumentreferenzliste des Strukturverzeichnisses der Datenbank sowie die gegebenenfalls der Dokumentreferenz zugeordneten Pfadreferenzen sowohl in der Fehlpfadliste als auch in der Zusatzpfadliste gelöscht werden. Somit ist eine referentielle Integrität der Datenbank gewährleistet.

Der Benutzer erteilt etwa mittels der Eingabetastatur der zentralen Verarbeitungseinheit des Computersystems einen Befehl, wonach ein Suchprogramm die Datenbank etwa nach einem bestimmten Begriff, einer Zeichenfolge, einem Bitmuster oder dergleichen Daten durchsuchen soll. Der Benutzer nennt wenigstens ein Datenelement bzw. einen Pfad, der zu dem Datenelement führt, und gibt somit einen Bereich an, innerhalb dessen die gesuchten Daten aufgefunden werden sollen. Bei einem anderen Ausführungsbeispiel, das unten nicht weiter erläutert wird, ist der "Benutzer" als ein Programm ausgebildet, das auf einem zweiten Computersystem läuft und eine Abfrage der Datenbank generiert, die durch eine Schnittstelle an das erste Computersystem gelangt und die Datenbank durchsucht.

Das Suchprogramm durchsucht die Fehlpfadliste des Strukturverzeichnisses (Missing Path Reference) und stellt anhand der unter Zuordnung zu den Dokumentreferenzen eingetragenen Pfadreferenzen fest, welche gespeicherten Dokumente das vom Benutzer genannte Datenelement nicht enthalten. Von den in der Fehlpfadliste angegebenen Pfaden sind nämlich solche Datenelemente erfasst, deren Position in der Struktur des zugeordneten Dokuments einem Knoten in dem Schema der Datenbank entspräche oder dem Knoten untergeordnet wäre. Da der referenzierte Pfad im zugeordneten Dokument fehlt, können auch die erfassten Datenelemente in dem zugeordneten Dokument nicht vorhanden sein, so dass sich eine inhaltliche Suche nach den Daten erübrigt und ein Ergebnis der Abfrage schnell vorliegt.

Das Suchprogramm durchsucht ferner die Zusatzpfadliste des Strukturverzeichnisses. Wenn der zu durchsuchende Bereich eines Dokuments Positionen umfasst, die außerhalb des Schemas der Datenbank liegen, ist mittels der Eintragungen in der Zusatzpfadliste ein besonders rascher Zugriff auf diese Daten möglich. Das Suchprogramm durchsucht in diesem Falle ein übergeordnetes Datenelement des Schemas. Aufgrund der in der Zusatzpfadliste angegebenen Pfadreferenzen ist eine strukturelle Suche innerhalb dieses übergeordneten Datenelements möglich, so dass eine zeitraubende inhaltliche Suche auf den engeren Bereich des vom Benutzer angegebenen Datenelements beschränkt bleiben kann, wenn ein Pfad in der Zusatzpfadliste zu dem angegebenen Datenelement führt und ein Ergebnis der Abfrage schnell vorliegt.

Die vorgenannten, anhand des Ausführungsbeispiels der erfindungsgemäßen Datenbank erläuterten Verfahren zum Zugriff auf Daten in der Datenbank innerhalb einer besonders geringen Zugriffszeit basieren auf einer Verwaltung der Datenbank gemäß den erfindungsgemäßen Verfahren, wonach insbesondere das Strukturverzeichnis angelegt und fortlaufend aktualisiert wird, so dass eine referenzielle Integrität der Datenbank gewährleistet ist. Somit ermöglichen die erfindungsgemäßen Verfahren, insbesondere in ihrer Kombination, einen besonders raschen Zugriff auf die Daten jener Dokumente, die in der Datenbank gespeichert sind, indem eine strukturelle Suche besonders weitgehend anwendbar ist, obwohl die Struktur der Dokumente von dem Schema der Datenbank abweichen kann.

## Patentansprüche

1. Verfahren zum Verwalten einer Datenbank,
mit einer Dokumentsammlung zur Aufnahme wenigstens eines referenzierbaren, strukturierten Dokuments,
das wenigstens ein Datenelement aufweist, dessen Position in der Dokumentstruktur durch einen referenzierbaren Strukturpfad bestimmt ist, ferner
mit einem Schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, und
mit einem Magazin, in das der Schemapfad sowie, zugeordnet zu dem Schemapfad, wenigstens eine Dokumentreferenz eintragbar ist,
wobei die Datenbank **gekennzeichnet ist durch** ein Strukturverzeichnisl, in das die Dokumentreferenz sowie, zugeordnet zu der Dokumentreferenz, wenigstens eine Strukturpfadreferenz eintragbar ist;
wobei das Verfahren die Schritte aufweist:
- Durchsuchen des Magazins, um zu prüfen, ob die Strukturpfadreferenz des Dokuments einer Schemapfadreferenz des Schemas entspricht,
und - falls ja -
- Eintragen der Dokumentreferenz in das Magazin der Datenbank unter Zuordnung der Dokumentreferenz zu der Schemapfadreferenz;
und - falls nein -
**gekennzeichnet durch** die Schritte:
- Eintragen der Dokumentreferenz in das Strukturverzeichnis der Datenbank, sofern die Dokumentreferenz noch nicht in das Strukturverzeichnis eingetragen ist,
- Eintragen der Strukturpfadreferenz als eine Zusatzpfadreferenz, die der Dokumentreferenz zugeordnet ist, in das Strukturverzeichnis der Datenbank, sofern die Zusatzpfadreferenz noch nicht unter Zuordnung zu der Dokumentreferenz in das Strukturverzeichnis eingetragen ist,
- wobei die Zusatzpfadreferenz eine Referenz auf jenen Zusatzpfad ist, dem zwar ein Datenelement im jeweiligen Dokument zugeordnet ist, zu dem jedoch kein entsprechender Knoten im Schema der Datenbank zugeordnet ist.

2. Verfahren zum Verwalten einer Datenbank,
mit einer Dokumentsammlung zur Aufnahme wenigstens eines referenzierbaren, strukturierten Dokuments, das wenigstens ein Datenelement aufweist, dessen Position in der Dokumentstruktur durch einen referenzierbaren Strukturpfad bestimmt ist, ferner
mit einem Schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, und
mit einem Magazin, in das der Schemapfad sowie, zugeordnet zu dem Schemapfad, wenigstens eine Dokumentreferenz eintragbar ist,
wobei die Datenbank **gekennzeichnet ist durch** ein Strukturverzeichnis, in das die Dokumentreferenz sowie, zugeordnet zu der Dokumentreferenz, wenigstens eine Strukturpfadreferenz eintragbar ist;
wobei das Verfahren die Schritte aufweist:
- Durchsuchen des Magazins, um zu prüfen, ob die Strukturpfadreferenz des Dokuments einer Schemapfadreferenz des Schemas entspricht,
und - falls ja -
- Eintragen der Dokumentreferenz in das Magazin der Datenbank unter Zuordnung der Dokumentreferenz zu der Schemapfadreferenz;
**gekennzeichnet ist durch** die Schritte:
- Durchsuchen des Dokuments, um zu prüfen, ob die Schemapfadreferenz einer der dem Dokument zugeordneten Strukturpfadreferenzen entspricht;
und - falls nein -
- Eintragen der Dokumentreferenz in das Strukturverzeichnis der Datenbank, sofern die Dokumentreferenz noch nicht in das Strukturverzeichnis eingetragen ist; sowie
- Eintragen der Schemapfadreferenz als eine Fehlpfadreferenz, die der Dokumentreferenz zugeordnet ist, in das Strukturverzeichnis der Datenbank, sofern die Fehlpfadreferenz noch nicht unter Zuordnung zu der Dokumentreferenz in das Strukturverzeichnis eingetragen ist,
- wobei die Fehlpfadreferenz eine Referenz auf jenen Pfad ist, der im Schema der Datenbank zu einem Knoten führt, zu dem es im jeweiligen Dokument kein entsprechendes Datenelement gibt.

3. Verfahren mit den Merkmalen der Ansprüche 1 und 2.

4. Verfahren nach einem der vorstehenden Ansprüche,
**gekennzeichnet durch** die Schritte:
- Prüfen, ob in dem Strukturverzeichnis der Datenbank zu einem Dokument, das aus der Datenbank gelöscht wird, ein Eintrag der Dokumentreferenz besteht, und - falls ja -
- Prüfen, ob wenigstens ein der Dokumentreferenz zugeordneter Eintrag einer Fehlpfadreferenz besteht, und - falls ja -
- Löschen der wenigstens einen ermittelten Fehlpfadreferenz aus dem Strukturverzeichnis der Datenbank;
sowie ferner:
- Prüfen, ob wenigstens ein der Dokumentreferenz zugeordneter Eintrag einer Zusatzpfadreferenz besteht, und - falls ja -
- Löschen der wenigstens einen ermittelten Zusatzpfadreferenz aus dem Strukturverzeichnis der Datenbank;
sowie ferner:
- Löschen der Dokumentreferenz aus dem Strukturverzeichnis der Datenbank.

5. Verfahren nach einem der vorstehenden Ansprüche,
**dadurch gekennzeichnet, dass** das Strukturverzeichnis listenartig ausgebildet ist und eine Dokumentliste zur Aufnahme der Dokumentreferenz des in der Datenbank gespeicherten Dokuments aufweist.

6. Verfahren nach Anspruch 5,
**dadurch gekennzeichnet, dass** das Strukturverzeichnis eine Zusatzpfadliste zur Aufnahme der Strukturpfadreferenzen als Zusatzpfadreferenzen aufweist, die den eingetragenen Dokumenten zugeordnet sind.

7. Verfahren nach einem der Ansprüche 5 oder 6,
**dadurch gekennzeichnet, dass** das Strukturverzeichnis eine Fehlpfadliste zur Aufnahme der Schemapfadreferenzen als Fehlpfadreferenzen aufweist, die den eingetragenen Dokumenten zugeordnet sind.

8. Verfahren nach einem der vorstehenden Ansprüche,
**dadurch gekennzeichnet,**
**dass** das strukturierte Dokument in einer Auszeichnungssprache formatiert ist, und
**dass** jede Position in der Struktur bzw. jedes Datenelement durch einen Bezeichner der Auszeichnungssprache bezeichnet ist.

9. Verfahren nach Anspruch 8,
**dadurch gekennzeichnet,**
**dass** die Auszeichnungssprache als XML ausgebildet ist.

10. Datenbank,
mit einer Dokumentsammlung zur Aufnahme wenigstens eines referenzierbaren, strukturierten Dokuments, das wenigstens ein Datenelement aufweist, dessen Position in der Dokumentstruktur durch einen referenzierbaren Strukturpfad bestimmt ist, ferner
mit einem Schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, und
mit einem Magazin, in das der Schemapfad sowie, zugeordnet zu dem Schemapfad, wenigstens eine Dokumentreferenz eintragbar ist,
**gekennzeichnet durch** ein Strukturverzeichnis , in das die Dokumentreferenz sowie, zugeordnet zu der Dokumentreferenz, wenigstens eine Strukturpfadreferenz als Zusatzpfadreferenz eintragbar ist,
wobei die Zusatzpfadreferenz eine Referenz auf jenen Zusatzpfad ist, dem zwar ein Datenelement im jeweiligen Dokument zugeordnet ist, zu dem jedoch kein entsprechender Knoten im Schema der Datenbank zugeordnet ist.

11. Datenbank,
mit einer Dokumentsammlung zur Aufnahme wenigstens eines referenzierbaren, strukturierten Dokuments,
das wenigstens ein Datenelement aufweist, dessen Position in der Dokumentstruktur durch einen referenzierbaren Strukturpfad bestimmt ist, ferner
mit einem schema, das einen ersten Knoten aufweist, an den weitere Knoten abhängig anknüpfbar sind, so dass von dem ersten Knoten jeweils ein referenzierbarer Schemapfad zu jedem weiteren Knoten des Schemas führt, und
mit einem Magazin, in das der Schemapfad sowie, zugeordnet zu dem Schemapfad, wenigstens eine Dokumentreferenz eintragbar ist,
**gekennzeichnet durch** ein Strukturverzeichnis , in das die Dokumentreferenz sowie, zugeordnet zu der Dokumentreferenz, wenigstens eine Strukturpfadreferenz als Fehlpfadreferenz eintragbar ist,
wobei die Fehlpfadreferenz eine Referenz auf jenen Pfad ist, der im Schema der Datenbank zu einem Knoten führt, zu dem es im jeweiligen Dokument kein entsprechendes Datenelement gibt.

12. Datenbank mit den Merkmalen von Anspruch 10 und Anspruch 11.

13. Computerprogramm mit Programmcode zur Durchführung eines Verfahrens nach einem der vorstehenden Ansprüche 1-9.

## Claims

1. Method for managing a data base with a document set for the reception of at least one structured document which can be referenced, which comprises at least one data element, whose position in the document structure is determined by a structure path which can be referenced, further
with a schema, which comprises a first node, at which further nodes can be dependently connected, such that from the first node a schema path which can be referenced leads to each further node of the schema, respectively, and
with a repository, into which the schema path can be inserted, as well as at least one document reference assigned to the schema path;
whereby the data base is **characterized by** a structure index, into which the document reference can be inserted as well as at least one structure path reference assigned to the document reference; whereby the method comprises the steps:
- Searching of the repository, in order to check if the structure path reference of the document corresponds to a schema path reference of the schema,
and - if yes -
- Inserting of the document reference into the repository of the data base, thereby assigning the document reference to the schema path reference;
and - if no -
**characterized by** the steps:
- Inserting of the document reference into the structure index of the data base, if the document reference is not yet inserted into the structure index,
- Inserting of the structure path reference as an additional path reference, which is assigned to the document reference, into the structure index of the data base, if the additional path reference is not yet inserted into the structure index while being assigned to the document reference,
- whereby the additional path reference is a reference to this additional path to which a data element within the respective document indeed is assigned, however to which no respective node in the schema of the data base is assigned.

2. Method for managing a data base, with a document set, for the reception of at least one structured document which can be referenced, which comprises at least one data element, whose position in the document structure is determined by a structure path which can be referenced, further
with a schema, which comprises a first node, at which further nodes can be dependently connected such that from the first node a schema path which can be referenced leads to each further node of the schema, respectively, and
with a repository, into which the schema path can be inserted as well as at least one document reference which is assigned to the schema path,
whereby the data base is **characterized by** a structure index, into which the document reference can be inserted as well as at least one structure path reference assigned to the document reference; whereby the method comprises the steps:
- Searching of the repository, in order to check if the structure path reference of the document corresponds to a schema path reference of the schema,
and - if yes -
- Inserting of the document reference into the repository of the data base while assigning the document reference to the schema path reference;
**characterized by** the steps:
- Searching of the document, in order to check, if the schema path reference corresponds to a structure path reference assigned to the document;
and - if no -
- Inserting of the document reference into the structure index of the data base, if the document reference is not yet inserted into the structure index;
as well as
- Inserting of the schema path reference as a fail path reference, which is assigned to the document reference, into which the structure index of the database, if the fail path difference is not yet inserted into the structure index while it is assigned to the document reference,
- whereby the fail path reference is a reference to each path which guides to a node in the schema of the data base, to which in the respective document no corresponding data element exists.

3. Method with the features of claims 1 and 2.

4. Method according to one of the preceding claims, **characterized by** the steps:
- Checking if with respect to a document which is deleted from the database in the structure index of the database an entry of the document reference exists, and - if yes -
- Checking if at least one entry of a fail path reference assigned to the document reference exists, and - if yes -
- Deleting of the at least one determined fail path reference from the structure index of the data base;
as well as further:
- Checking if at least one entry of an additional path reference assigned to the document reference exists, and -ifyes-
- Deleting of the at least one determined additional path reference from the structure index of the data base;
as well as further:
- Deleting of the document reference from the structure index of the data base.

5. Method according to one of the preceding claims, **characterized in that** the structure index is formed list like and comprises a document list for the reception of the document reference of the document saved in the data base.

6. Method according claim 5, **characterized in that** the structure index comprises an additional path list for the reception of structure path references as additional path references, which are assigned to the registered documents.

7. Method according to one of claim 5 or 6, **characterized in that** the structure index comprises a fail path list for the reception of schema path references as fail path references, which are assigned to the registered documents.

8. Method according to one of the preceding claims, **characterized in that** the structured document is formatted in a mark-up language, and **in that** each position in the structure, respectively each data element, is denoted by a tag of the mark-up language.

9. Method according to claim 8, **characterized in that** the mark-up language is formed as XML.

10. Data base,
with a document set for the insertion of at least one structured document which can be referenced, which comprises at least one data element, whose position in the document structure is determined by a structure path which can be referenced, further with a schema, which comprises a first node, at which further nodes can be dependently connected, such that from the first node a schema path which can be referenced leads to each further node of the schema, respectively, and
with a repository, into which the schema path can be inserted as well as at least one document reference assigned to the schema path,
**characterized by** a structure index, into which the document reference can be inserted as well as at least one structure path reference as additional path reference assigned to the document reference,
whereby the additional path reference is a reference to each additional path to which indeed a data element is assigned in the respective document, however to which no corresponding node in the schema of the database is assigned.

11. Data base with a document set for the insertion of at least one structured document which can be referenced, which comprises at least one data element, whose position in the document structure is determined by a structure path which can be referenced, further
with a schema which comprises a first node, at which further nodes can be dependently connected, such that from the first node a schema path which can be referenced leads to each further node of the schema, respectively, and
with a repository, into which the schema path can be inserted as well as at least one document reference assigned to the schema path,
**characterized by** a structure index into which the document reference can be inserted as well as at least one structure path reference as fail path reference assigned to the document reference,
whereby the fail path reference is a reference to each path, which leads to a node in the schema of the database, to which in the respective document no corresponding data element exists.

12. Database with the features of claim 10 and claim 11.

13. Computer program with a program code for the execution of a method according to one of the preceding claims 1-9.

## Revendications

1. Procédé de gestion d'une base de données avec un jeu de documents pour la réception d'au moins un document structuré qui peut être référencé, qui comprend au moins un élément de donnée, dont la position dans la structure du document est déterminée par un chemin de structure qui peut être référencé, en outre
avec un schéma, qui comprend un premier noeud, auquel d'autres noeuds peuvent être reliés de façon dépendante, de sorte qu'à partir du premier noeud un chemin de schéma qui peut être référencé conduise à chaque autre noeud du schéma, respectivement, et
avec un référentiel, dans lequel le chemin de schéma peut être inséré, ainsi qu'au moins une référence de document attribuée au chemin de schéma ;
dans lequel la base de données est **caractérisée par** un index de structure, dans lequel la référence de document peut être insérée ainsi qu'au moins une référence de chemin de structure attribuée à la référence de document ;
dans lequel le procédé comprend les étapes suivantes :
- recherche dans le référentiel, afin de vérifier si la référence du chemin de structure du document correspond à une référence de chemin de schéma du schéma,
et - dans l'affirmative -
- insertion de la référence du document dans le référentiel de la base de données, de manière à attribuer la référence du document à la référence du chemin de schéma ;
et - dans la négative - :
**caractérisé par** les étapes suivantes :
- insertion de la référence du document dans l'index de structure de la base de données, si la référence de document n'est pas déjà insérée dans l'index de structure,
- insertion de la référence de chemin de structure en tant que référence de chemin additionnelle, qui est attribuée à la référence de document, dans l'index de structure de la base de données, si la référence de chemin additionnelle n'est pas encore insérée dans l'index de structure tout en étant attribuée à la référence de document,
- de sorte que la référence de chemin additionnel soit une référence à ce chemin additionnel auquel un élément de donnée au sein du document respectif est effectivement attribué, mais cependant auquel aucun noeud respectif du schéma de la base de données n'est attribué.

2. Procédé de gestion d'une base de données, avec un jeu de documents, pour la réception d'au moins un document structuré qui peut être référencé, qui comprend au moins un élément de donnée, dont la position dans la structure du document est déterminée par un chemin de structure qui peut être référencé, en outre
avec un schéma, qui comprend un premier noeud, auquel d'autres noeuds peuvent être reliés de façon dépendante, de sorte qu'à partir du premier noeud un chemin de schéma qui peut être référencé conduise à chaque autre noeud du schéma, respectivement, et
avec un référentiel, dans lequel le chemin de schéma peut être inséré, ainsi qu'au moins une référence de document qui est attribuée au chemin de schéma ;
dans lequel la base de données est **caractérisée par** un index de structure, dans lequel la référence de document peut être insérée ainsi qu'au moins une référence de chemin de structure attribuée à la référence de document ;
dans lequel le procédé comprend les étapes suivantes :
- recherche dans le référentiel, afin de vérifier si la référence du chemin de structure du document correspond à une référence de chemin de schéma du schéma,
et - dans l'affirmative -
- insertion de la référence du document dans le référentiel de la base de données tandis que la référence du document est attribuée à la référence du chemin de schéma ;
**caractérisé par** les étapes suivantes :
- recherche dans le document, afin de vérifier si la référence de chemin de schéma correspond à une référence de chemin de structure attribué au document ;
et - dans la négative -
- insertion de la référence du document dans l'index de structure de la base de données, si la référence du document n'est pas encore insérée dans l'index de structure ;
ainsi que :
- insertion de la référence du chemin de schéma en tant que référence de chemin d'échec, qui est attribuée à la référence de document, dans laquelle l'index de structure de la base de données, si la référence de chemin d'échec n'est pas encore insérée dans l'index de structure tout en étant attribuée à la référence de document,
- de sorte que la référence de chemin d'échec soit une référence à chaque chemin qui guide vers un noeud du schéma de la base de données vers lequel il n'existe aucun élément de donnée correspondant dans le document respectif.

3. Procédé comprenant les caractéristiques des revendications 1 et 2.

4. Procédé selon l'une des revendications précédentes, **caractérisé par** les étapes suivantes :
- vérification s'il existe par rapport à un document qui est effacé de la base de données dans l'index de structure de la base de données une rubrique de la référence de document, et - dans l'affirmative -
- vérification s'il existe au moins une rubrique d'une référence de chemin d'échec attribuée à la référence de document, et - dans l'affirmative -
- effacement de la au moins une référence de chemin d'échec déterminée de l'index de structure de la base de données ;
ainsi qu'en outre :
- vérification s'il existe au moins une rubrique d'une référence de chemin additionnel attribuée à la référence de document, et - dans l'affirmative -
- effacement de la au moins une référence de chemin additionnel déterminée de l'index de structure de la base de données ;
ainsi qu'en outre :
- effacement de la référence de document de l'index de structure de la base de données.

5. Procédé selon l'une des revendications précédentes, **caractérisé en ce que** l'index de structure est formé à la manière d'une liste et comprend une liste de documents pour la réception de la référence de document du document sauvegardé dans la base de données.

6. Procédé selon la revendication 5, **caractérisé en ce que** l'index de structure comprend une liste de chemins additionnels pour la réception de références de chemin de structure en tant que référence de chemin additionnel, qui sont attribuées aux documents enregistrés.

7. Procédé selon l'une des revendications 5 ou 6, **caractérisé en ce que** l'index de structure comprend une liste de chemins d'échec pour la réception de références de chemins de schéma en tant que références de chemin d'échec, qui sont attribuées aux documents enregistrés.

8. Procédé selon l'une des revendications précédentes, **caractérisé en ce que** le document structuré est formaté dans un langage de balisage, et **en ce que** chaque position dans la structure, respectivement chaque élément de donnée, est indiqué par un marqueur du langage de balisage.

9. Procédé selon la revendication 8, **caractérisé en ce que** le langage de balisage est formé en tant que XML.

10. Base de données,
avec un jeu de documents pour l'insertion d'au moins un document structuré qui peut être référencé, qui comprend au moins un élément de donnée, dont la position dans la structure du document est déterminée par un chemin de structure qui peut être référencé, en outre avec un schéma, qui comprend un premier noeud, auquel d'autres noeuds peuvent être reliés de façon dépendante, de sorte qu'à partir du premier noeud un chemin de schéma qui peut être référencé conduise à chaque autre noeud du schéma, respectivement, et
avec un référentiel, dans lequel le chemin de schéma peut être inséré, ainsi qu'au moins une référence de document attribuée au chemin de schéma ;
**caractérisée par** un index de structure, dans lequel la référence de document peut être insérée ainsi qu'au moins une référence de chemin de structure attribuée à la référence de document,
de sorte que la référence de chemin additionnelle soit une référence à chaque chemin additionnel auquel un élément de donnée est effectivement attribué dans le document respectif, mais auquel cependant aucun noeud correspondant du schéma de la base de données n'est attribué.

11. Base de données avec un jeu de documents pour l'insertion d'au moins un document structuré qui peut être référencé, qui comprend au moins un élément de donnée, dont la position dans la structure du document est déterminée par un chemin de structure qui peut être référencé, en outre
avec un schéma, qui comprend un premier noeud, auquel d'autres noeuds peuvent être reliés de façon dépendante, de sorte qu'à partir du premier noeud un chemin de schéma qui peut être référencé conduise à chaque autre noeud du schéma, respectivement, et
avec un référentiel, dans lequel le chemin de schéma peut être inséré, ainsi qu'au moins une référence de document attribuée au chemin de schéma ;
**caractérisée par** un index de structure, dans lequel la référence de document peut être insérée ainsi qu'au moins une référence de chemin d'échec attribuée à la référence de document,
de sorte que la référence de chemin d'échec soit une référence à chaque chemin qui conduit à un noeud du schéma de la base de données vers lequel il n'existe aucun élément de donnée correspondant dans le document respectif.

12. Base de données avec les caractéristiques de la revendication 10 et de la revendication 11.

13. Programme informatique avec un code de programme pour l'exécution d'un procédé selon l'une des revendications précédentes 1 à 9.
